# EUROPEAN PATENT SPECIFICATION

(11) **EP 3 822 130 B1**
(45) Date of publication and mention of the grant of the patent: **01.03.2023**
(21) Application number: 20206891.2
(22) Date of filing: 11.11.2020
(51) Int. Cl.: B60R 16/037, G01C 5/00

(54) **SYSTEM AND METHOD FOR ADJUSTING VEHICLE SETTINGS BASED ON HEIGHT OF PORTABLE WIRELESS DEVICE**
SYSTEM UND VERFAHREN ZUR ANPASSUNG VON FAHRZEUGEINSTELLUNGEN BASIEREND AUF DER HÖHE EINER TRAGBAREN DRAHTLOSEN VORRICHTUNG
SYSTÈME ET PROCÉDÉ DE RÉGLAGE DE PARAMÈTRES DE VÉHICULE SUR LA BASE DE LA HAUTEUR D'UN DISPOSITIF SANS FIL

(30) Priority: 12.11.2019 US 201916680617
(43) Date of publication of application: 19.05.2021
(73) Proprietor: Aptiv Technologies Limited, 14004 St. Michael (BB)
(72) Inventor: KNUTSON, Eric P., Kokomo, IN 46901 (US); RUPPEL, Christopher D., Carmel, IN 46033 (US); JAVALI, Sunil Lingamurthy, Kokomo, IN 46902 (US); PHAM, Linh, Kokomo, IN 46902 (US)
(74) Representative: Westphal, Mussgnug & Partner, Patentanwälte mbB

(56) References cited:
- EP-A1- 3 018 920
- WO-A1-2018/060022
- GB-A- 2 560 500
- US-A1- 2014 308 971
- US-A1- 2017 278 326
- US-A1- 2018 208 204

## Description

This disclosure is generally directed to vehicle systems and, more specifically to systems and methods for determining position information of a portable wireless device relative to a vehicle and utilizing device position information to make initial adjustments to user settings of the vehicle.

Modern vehicle system often include one or more transceivers for communicating with a wireless device, such as a key fob, and using radio signals for controlling vehicle functions, such as passive keyless entry and passive starting. Many key fobs are relatively small in size and intended to be carried by the user, for example, in a clothing article of a user.

Modern vehicle systems further often include a variety of user-adjustable features such as seats, and mirrors. Typically, adjustments to vehicle settings are made by the user upon entry into the vehicle. Adjustments may be manually made or automated, such as in an identification-based system that makes adjustments based on stored setting values. The setting adjustment period can extend to several minutes depending on the extent of changes made by the user. Typically these vehicle adjustments occur prior to use or departure of the vehicle.

According to one aspect, a vehicle system is provided with a portable wireless device, such as a key fob, that is configured to communicate with the vehicle using a wireless signal. The vehicle system includes multiple nodes, such as base stations, positioned about or within the vehicle. Each node is configured to receive a wireless signal and to generate a signal indicative of position of the wireless device. Together the nodes and a controller are configured to determine a three-dimensional location of the portable wireless device based on the signal generated by each node.

According to another aspect, a vehicle system is provided with a portable device that is configured to provide a wireless signal. The vehicle system includes multiple nodes configured to receive the wireless signal and to generate a signal indicative of a position of the wireless signal. Information from the nodes is used to determine at least a vertical height of the wireless signal device to a ground surface.

According to yet another aspect, a vehicle system is provided that determines at least a vertical height of the wireless portable device. A method of evaluating the device height information is disclosed. In one example, height information of the wireless device is evaluated within a predetermined distance from the vehicle and assumptions can be made depending on the wireless device's position and movement just prior to user entry into the vehicle. The method further includes using the height information to make vehicle adjustments depending on the height of the wireless device relative to ground surface.

According to yet another aspect, a vehicle system is provided that determines at least a vertical height of the portable wireless device and evaluates whether the wireless device is being carried in an article of clothing of the user. In one example, the vehicle system evaluates whether the portable wireless device is being carried within a user's pants pocket as the user approaches the vehicle.

According to yet another aspect of the invention, a vehicle system is provided that evaluates whether the wireless device is being carried in an article of clothing of the user by determining a vertical height of the device as the user approaches the vehicle. In one example, the evaluation can occur during a predetermined period of time just prior to the user accessing the vehicle.
Fig. 1 is a schematic view of a vehicle with a vehicle system for detecting a 3D location of a wireless device consistent with one or more aspects of this disclosure.
Fig. 2 is a schematic view of the wireless device and vehicle node consistent with one or more aspects of this disclosure.
Fig. 3 is a top view of a vehicle system and vehicle nodes consistent with aspects of this disclosure.
Fig. 4 is a flowchart depicting a method for determining 3D position of the wireless device consistent with aspects of this disclosure

According to one aspect, this disclosure is directed to a system and method of utilizing wireless device location information to effectuate vehicle operations particularly based on movement of a portable wireless device (or "PWD") relative to a vehicle. Wireless key fobs, cell phones, personal digital assistants and other mobile devices are examples of portable wireless devices.

According to another aspect of the disclosure, vehicle user settings are configured based on PWD height location relative to a vehicle. In one example, the PWD is a key fob and fob location information is determined as the user approaches or enters the vehicle and vehicle user settings are then configured.

According to another aspect of the disclosure, a method is provided performed by a vehicle controller for enabling automatic configuration of vehicle settings of a vehicle, the method comprising: receiving signals from a PWD as the user approaches the vehicle; determining a position of the PWD relative to a vehicle based on the received signals; evaluating whether the PWD is being carried within an article of clothing of the user; and adjusting vehicle settings if the PWD is likely being carried within an article of clothing, with the vehicle settings being adjusted based on estimated dimensions of the user.

The embodiments of the present disclosure generally provide for a plurality of circuits or other electrical devices. All references to the circuits and other electrical devices and the functionality provided by each, are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microprocessors, integrated circuits, memory devices (e.g., FLASH, RAM, ROM, EPROM, EEPROM, or other suitable variants thereof) and software which co-act with one another to perform any number of the operation(s) as disclosed herein.

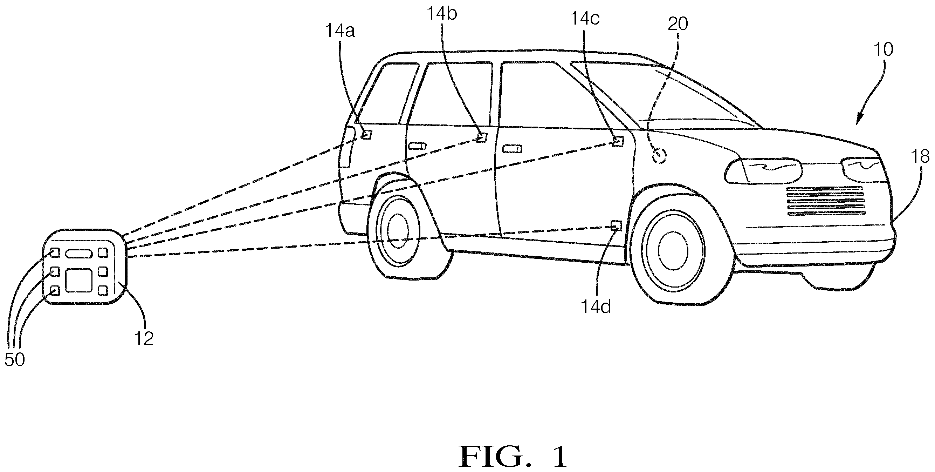

Referring to FIG. 1, a vehicle system 10 for determining a location of a wireless device 12 relative to a vehicle is illustrated in accordance with one or more embodiments. In the illustrated example, the vehicle system 10 includes a portable wireless device 12 (e.g., a key fob) and at least four nodes, or base stations 14a, 14b, 14c, 14d (together "14"). A system controller 20 is operatively connected to the nodes 14. According to the illustrated embodiment, three of the nodes 14a, 14b, 14c are aligned in a generally horizontal plane and the fourth node 14d is vertically spaced apart from the other nodes 14. As described further herein, the vertical spacing of the fourth node 14d relative to the other nodes 14a, 14b, 14c allows the vehicle system 10 to determine the position of the fob 12 in three dimensions.

In one embodiment, the controller 20, nodes 14 and the fob 12 engage in a series of signal exchanges with one another and utilize a time of flight (TOF) implementation to determine a distance of the fob 12 from the vehicle 18. Thereafter, the nodes 14 and controller 16 employ trilateration to locate the fob 12. The use of trilateration enables the controller 20 to evaluate horizontal position of the fob 12 relative to the vehicle using distance measurements. In comparison, triangulation uses angles of incidence (angle of arrival, or AoA) of signals to determine source position.

In some embodiments, the vertical offset between the fourth node 14d and the other nodes (14 a, 14 b, 14c) enables the vehicle system 10 to calculate a three-dimensional (3-D) location of the fob 12 relative to multiple planes, using trilateration. Such 3-D analysis provides for a more accurate location determination, than 2-D analysis relative to a single plane. For example, in some embodiments, the controller 20 may determine that the fob 12 is positioned at a distance of 4.5 feet away from the vehicle and that the fob 12 is positioned a distance of 3.2 feet from the ground surface.

The controller 20 generally includes additional circuitry to lock and unlock the vehicle in response to command signals as provided by the fob 12. In some embodiments, the controller 20 may perform desired operations (e.g., lock, unlock, lift gate release, etc.) with the vehicle if the fob 12 transmits a command indicative of the desired operation.

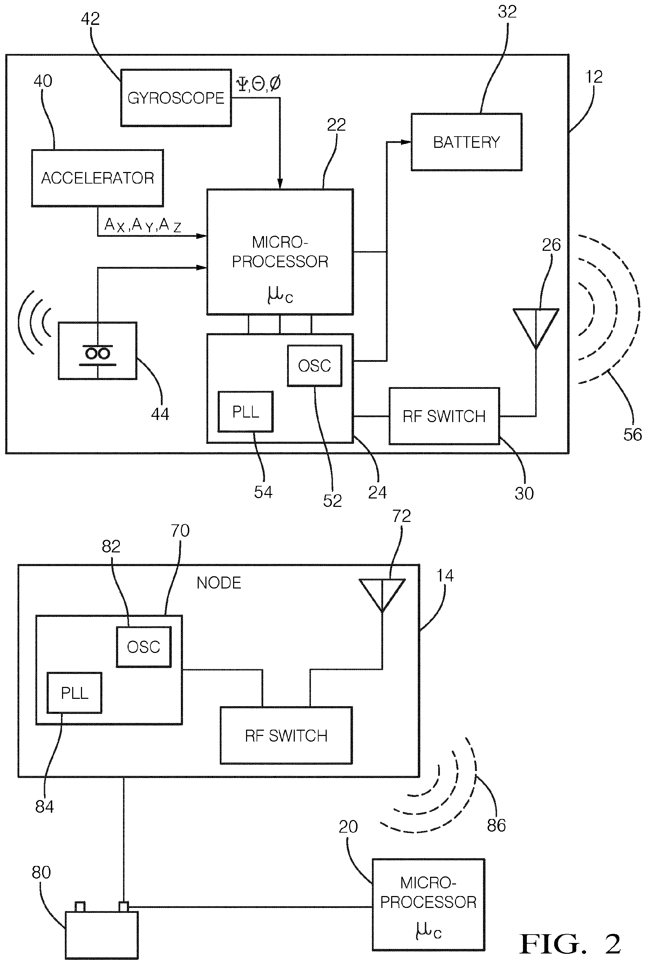

Referring now to FIG. 2, a detailed schematic view of the fob 12 and nodes 14, in accordance with one or more embodiments is provided. The fob 12 includes a microcontroller 22, a transmitter/receiver ("transceiver") 24, and at least one antenna 26. The microcontroller 22 is operably coupled to the transceiver 24 and the antenna 26 for transmitting and receiving signals to/from the node stations 14. A radio frequency (RF) switch 30 is operably coupled to the antennas 26 for coupling the same to the transceiver 24.

The fob 12 includes a battery 32 that powers the microcontroller 22 and the transceiver 24 according to one or more embodiments. The fob 12 may also include an inertial measurement unit (IMU) including an accelerometer 40 and a gyroscope 42 for detecting the motion of the wireless device 12. The accelerometer 40 may provide data that is indicative of the acceleration of the fob 12 in three axis (Ax, Ay, and Az). The gyroscope 42 may provide orientation data that is indicative of a yaw rate (Ψ), a pitch rate (θ), and a roll rate (ϕ) of the fob 12.

The fob 12 may include a piezo-sounder 44 operably coupled to the microcontroller 22 for providing additional user feedback. A plurality of switches 50 are positioned on the wireless device 12 for transmitting commands to the vehicle for initiating vehicle operations such as door lock and unlock, lift gate release, and remote start.

In one embodiment, the transceiver 24 is generally configured to operate at a frequency of between 3 and 10 GHz and communicate within an ultra-wide band (UWB) bandwidth of at least 500 MHz. In one embodiment, transceiver 24 operates at a frequency of between 3.1 GHz and 10.6 GHz. Such high frequency communication in the UWB bandwidth enables the vehicle system 10 to determine a distance of the fob 12 with respect to the vehicle with accuracy. The transceiver 24 generally includes an oscillator 52 and a phase locked loop (PLL) 54 for enabling the transceiver 24 to operate at the frequency of between 3 and 10 GHz.

The microcontroller 22 is operably coupled to the transceiver 24 and the antenna 26 for transmitting a wireless signal 56 to the nodes 14. The wireless signal 56 may include data such as encryption data, the acceleration data (Ax, Ay, and Az), and the gyroscope data (Ψ, θ, and ϕ) according to one or more embodiments.

Nodes 14 generally include, a transceiver 70, and at least one antenna 72. Nodes 14 are in communication with vehicle controller 20. A power source 80 in the vehicle powers the controller 20 and the node transceivers 70. The controller 20 is operably coupled to the transceiver 70 and the antenna 72 for transmitting and receiving signals to/from the fob 12 (e.g., the wireless signal 56). The controller 20 determines the position of the fob 12 based on these signals. The vehicle further includes circuitry (not shown) for performing locking/unlocking of vehicle doors and/or a liftgate/trunk and for performing remote start operation. In one embodiment the vehicle further includes a vehicle location circuitry (not shown), including chirping or light flashing to assist a user in locating the vehicle in response to a fob 12 signal.

The transceiver 70 is also generally configured to operate at a frequency of between 3 and 10 GHz and communicate within an ultra-wide band (UWB) bandwidth of at least 500 MHz. Operating the transceiver 70 at an operating frequency of between 3 and 10 GHz and within the UWB bandwidth may enable the nodes 14 and controller 20 to determine the distance of the fob 12 with respect to the vehicle within a high degree of accuracy. The transceiver 70 generally includes an oscillator 82 and a PLL 84 for enabling the transceiver 70 to operate at the frequency of between 3 and 10 GHz.

In some embodiments, each node 14 receives the wireless signal 56 from the fob 12, and transmits a message 86 to the controller 20 that includes information that is indicative of the time of flight of the wireless signal. The message 86 may also include the acceleration data (Ax, Ay, and Az) and the gyroscope data (Ψ, θ, and ϕ). In one embodiment the nodes 14 communicate with the controller 20 using a local interconnect network (LIN).

In some embodiments, the fob 12, the controller 20, and the nodes 14 are each arranged to transmit and receive data within the UWB bandwidth of at least 500 MHz. For example, by operating in the UWB bandwidth range, such a condition yields a large frequency spectrum (e.g., both low frequencies as well as high frequencies) and a high time resolution which improves ranging accuracy. Such a large bandwidth (i.e., in the UWB bandwidth) may improve noise immunity and improve signal propagation. This may also improve the accuracy in determining the distance of the fob 12 since UWB bandwidth allows a more reliable signal transmission. As noted above, an operating frequency of 3-10 GHz enables the transceivers 24, 70 to transmit and receive data in the UWB range.

The utilization of the UWB bandwidth for the fob 12, the nodes 14, and controller 20 may provide for (1) the penetration of the transmitted signals to be received through obstacles and/or around obstacles with reduced multipath degradations, (2) high ranging (or positioning) accuracy, (3) high-speed data communications, (4) secure encoding of signals, and (5) a low cost implementation. Due to the plurality of frequency components in the UWB spectrum, transmitted data may be received at the fob 12 and nodes 14 more reliably when compared to data that is transmitted in connection with a narrow band implementation. These conditions may increase the reliability of data at the fob 12 and nodes 14.

The implementation of UWB in the fob 12 and nodes 14 is generally suitable for TOF applications. In other embodiments, the fob 12 and nodes 14 may communicate information at different frequencies and utilize non-TOF algorithms to calculate fob 12 position. In some embodiments, the nodes 14 are mounted within the passenger compartment and near windows or the windshield to allow for generally line of sight communication with the fob 12.

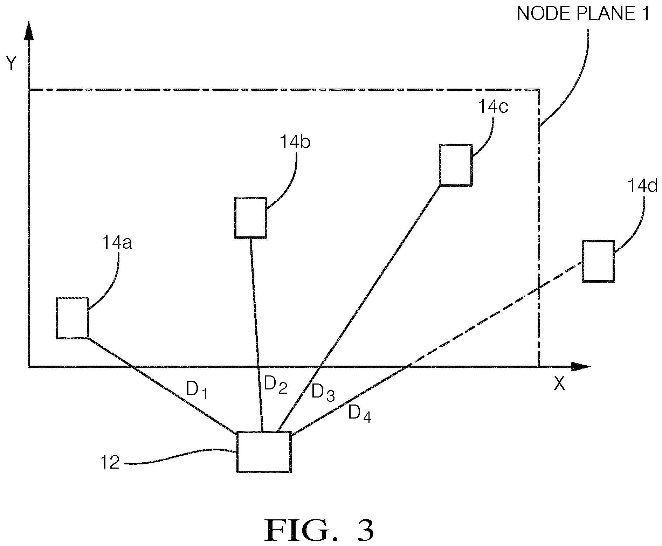

FIG. 3 is a top view of the vehicle system 10, and illustrates three of the nodes (14a, 14 b, and 14c) located in a common horizontal (XY) plane ("Node Plane 1"). The fourth node (node 14d) is vertically offset from Node Plane 1.

In one embodiment, the controller 20 determines a distance between the fob 12 and each node 14 using TOF. The controller 20 then determines a 3-D location of the fob 12 using trilateration calculations. Each node 14 receives the wireless signal 56 from the fob 12 and generates a message 86 having information that is indicative of the time of flight of the wireless signal. The controller 20 receives the time of flight information from each node 14 and engages in TOF calculations to determine a first distance (D1) between the fob 12 and the node 14a, a second distance (D2) between the fob 12 and the second node 14b, a third distance (D3) between the fob 12 and the third node 14c, and a fourth distance (D4) between the fob 12 and the fourth node 14d. At least three distance readings are needed for each trilateration calculation. In some embodiments, the vehicle system 10 performs multiple trilateration calculations to accurately determine a 3-D location of the fob 12.

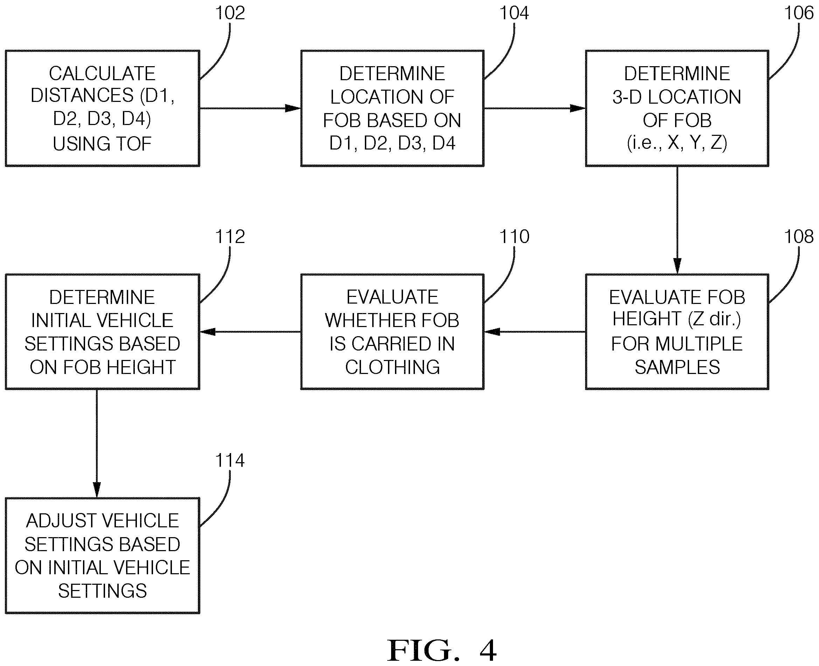

Referring now to FIG. 4, a flow chart 100 is provided illustrating a method for making initial vehicle settings based on fob location relative to the vehicle, according to one or more embodiments. At operation 102, the vehicle system controller 20 calculates distances (D1, D2, D3, D4) between the fob 12 and the four nodes 14a, 14b, 14c, 14d, using TOF techniques. At operation 104, the vehicle system controller 20 determines a location of the fob 12 relative to the four nodes 14. The vehicle system controller 20 determines the fob 12 location relative to nodes 14 using trilateration, based on distances D1, D2, D3, and D4. At operation 106, the vehicle system 10 determines a 3-D location of the fob 12. At operation 108, the vehicle system controller 20 evaluates a vertical height of the fob 12 across multiple samples. For example, controller 20 evaluates fob 12 height as the user traverses a five foot perimeter from the vehicle. The evaluation of fob height 12 can include a comparison to general population waist height data. In a general sense, one embodiment of the controller 20 evaluates whether the fob 12 is being carried in a pants pocket as the user approaches the vehicle and then make adjustments to vehicle settings if the fob 12 is likely being carried in a pants pocket based on reference to hypothetical user dimensions. In one example, once it is established that the fob height correlates to a likely user waist height, the system controller 20 can make initial adjustments to vehicle settings prior to the user entering the vehicle. At operation 110, the system controller 20 evaluates whether the fob 12 is likely being carried in an article of clothing of the user based on the determined fob height information. At operation 112, the system controller 20 evaluates initial vehicle settings based on determined fob height information. In one example, system controller 20 accesses a database of vehicle settings based on waist height, driver inseam dimensions, etc. At operation 114, the system controller 20 directs various vehicle settings to adjust to determined settings based on derived key fob height information. The controller 20 may make one or more initial adjustments to vehicle settings including: seats (backrest angle, fore/aft position, headrest level, lumbar position, seat depth, seat height, cushion tilt); mirrors (side mirrors and rear view mirror); seatbelt (seatbelt height adjustment, pre-tension levels); pedals (pedal height; pedal spacing); and steering wheel (tilt, telescoping length adjustment).

In yet other embodiments, the controller 20 may receive data from the IMU and evaluate movement signatures, such as gait or disability. In one example, gait information can be combined with waist height estimations to improve initial setting adjustment calculations. For example, IMU data may suggest the user's pants are hanging low due to intermittent excessive longitudinal (non-rotation) acceleration. In another example, IMU data may suggest the user's pants are riding high or the key fob is clipped to a waistband or belt (due to minimal detected non-rotational longitudinal acceleration). In other examples, IMU data may suggest stiffness in the user's hips or knees and the controller 20 can then make vehicle setting adjustments to accommodate the user's injury or disability. In yet another example, IMU data can be used to detect if the user approaches on a wheelchair or crutches or walker. The identification of such conditions using IMU data may be used by controller 20 to initiate a variety of accessibility algorithms.

The functions or steps of the system and method for making vehicle adjustments based on key fob position described above may also be implemented in or as a computer readable medium having non-transitory computer executable instructions stored thereon for determining a location of a key fob for use in a vehicle remote function system. More specifically, the computer executable instructions stored on the computer readable medium may include instructions for performing any or all of the activities, functions or steps described above in connection with the system or method disclosed herein.

In that regard, the controller 20 may comprise an appropriately programmed processor or other hardware, software, or any combination thereof for performing the functions described herein. The controller 20 may also comprise a memory, which may provide the computer readable medium and have the computer executable instructions stored thereon described above.

The controller 20 may operatively control one or more of a plurality of vehicle systems in accordance with a vehicle settings profile. One or more of the plurality of vehicle settings may adjust respective settings in accordance with vehicle driver dimension estimates. In some cases, the adjustment of the settings may be completed before the driver enters the vehicle and/or enables the engine of the vehicle such that the driver does not have to wait for the settings to be executed prior to entering the vehicle and/or enabling the engine of the vehicle.

As is readily apparent from the foregoing, a vehicle system and a method have been described for determining key fob position relative to a vehicle and utilizing fob position information to make vehicle adjustments based on height / body estimations of the user. In the described embodiments, the system and method determine fob location outside the vehicle using ultra-wide band wireless signals communicated between the fob and vehicle mounted antennas.

In some embodiments, additional IMU sensors (e.g., accelerometers (3-axis), gyroscopes, etc.) in a key fob can be used to detect a gait pattern for a person approaching a vehicle. The key fob and/or controller can analyze the gait pattern to identify particular characteristics of a vehicle driver. Based on sensor data the vehicle may (or may not) adjust the configuration of the vehicle prior to the person entering the vehicle. For example, when the probability that the key fob is carried within an article of clothing is equal to or above a threshold, the vehicle adjusts the configuration of the vehicle cabin in accordance with the stored settings. On the other hand, when the probability received from the key fob or other mobile device is below the threshold, the vehicle does not adjust the configuration of the vehicle cabin.

### Discussion of Possible Embodiments

The following are non-exclusive descriptions of possible embodiments of the present invention.

According to one aspect, a system for adjusting vehicle settings includes a key fob height evaluating system using one or more antennas nodes on the vehicle and a processing system. In one embodiment the fob height evaluating system calculates fob height using TOF calculations. The one or more antennas are configured to receive key fob signals and the processing system is configured to evaluate fob height based on signals received at the one or more antennas. For example, the processing system may combine key fob signals received at multiple nodes to determine fob position in the Z-direction (height).

In another aspect, a system for adjusting vehicle settings based on key fob position includes a plurality of nodes within a fob locating system, each including one or more antennas configured to receive a key fob signal, wherein ranges between each of the plurality of nodes and the key fob are determined based on the received fob signals, and a processing system configured to receive the ranges calculated with respect to each of the plurality of nodes, and wherein the processing system calculates a vertical height of the key fob, and an evaluating system configured to determine whether the key fob is being carried within an article of clothing of a driver based on said key fob vertical height, and a vehicle settings system for adjusting initial settings for a driver based on key fob vertical height and whether the key fob is being carried within an article of clothing of the driver.In one example, the processing system combines a plurality of time of flight (TOF) measurements or angle-of arrive (AoA) data to construct a map of key fob position.

In another example, the processing system constructs a 3D map of the key fob position. In another example, the processing system obtains vertical height samples of the key fob across a predetermined perimeter around the vehicle.

In yet another example, the evaluating system compares key fob height variations across a predetermined range from the vehicle. In yet another example the vehicle settings system determines initial settings based on database values correlating driver waist data or inseam data to key fob height. In another example, the evaluating system is augmented with outputs from an inertial measurement unit (IMU) on the key fob.

The one or more antennas may include at least a first antenna and a second antenna, wherein the first and second antennas are located a known distance from one another. The one or more antennas may include at least two antenna aligned in an XY-plane and a third antenna located a known distance from the plane (offset in the Z-direction). In one application, the processing system determines angle-of-arrival (AoA) data using closely-coordinated and clocked individual single-antenna node receivers.

The processing system may determine an angle-of-arrival (AoA) or time of flight (TOF) of multiple key fob signals to determine height of the fob above a ground surface. The processing system may calculate key fob height based on fob signals received at multiple nodes of the vehicle.

In another aspect, a system and method making adjustments to vehicle settings prior to a user entering a vehicle includes using a plurality of nodes and a processor system to evaluate key fob position. Once fob position is determined, the processor is configured to evaluate whether the key fob is being carried by a particular article of clothing on the user. In one example, the processor system includes a processor that accesses a database of user dimensions and calculates an updated vehicle setting estimate based on the fob position data collected from nodes as the user approaches the vehicle.

In another aspect, a system for adjusting vehicle settings based on key fob position, the system including a plurality of nodes within a fob locating system, each including one or more antennas configured to receive a key fob signal, wherein ranges between each of the plurality of nodes and the key fob are determined based on the received fob signals, and a processing system configured to receive the ranges calculated with respect to each of the plurality of nodes, and wherein the processing system calculates a vertical height of the key fob; and an evaluating system configured to determine whether the key fob is being carried within an article of clothing of a driver based on said key fob vertical height; and a vehicle settings system for adjusting initial settings for a driver based on key fob vertical height and whether the key fob is being carried within an article of clothing of the driver.

In one example, the processing system constructs a 3D map of the key fob position. In another example, the processing system obtains vertical height samples of the key fob across a predetermined perimeter around the vehicle.

In another example, the evaluating system compares key fob height variations across a predetermined range from the vehicle. In another example, the vehicle settings system determines initial settings based on database values correlating driver waist data or inseam data to key fob height. In one example, the evaluating system is augmented with outputs from an inertial measurement unit (IMU) on the key fob.

The systems of the preceding paragraphs can optionally include, additionally and/or alternatively any, one or more of the following features, configurations and/or additional components.

According to another aspect, a method of processing wireless signals received at a plurality of vehicle nodes to determine key fob position includes calculating for each signal received a distance between a local antenna and the key fob that generated the signal. The method further includes calculating a key fob position based on distance calculations between the key fob and vehicle nodes. The fob / node distance calculations are then used to determine a current position estimate, or at least a vertical height of the key fob relative to the vehicle. Key fob position information is then evaluated to determine whether or not to make adjustments to vehicle settings.

The method of the preceding paragraph can optionally include, additionally and/or alternatively any, one or more of the following features, configurations and/or additional components. For example, evaluating key fob height may include comparing key fob height with previously evaluated key fob heights to detect changes indicative of body movement. Evaluating key fob height may further include generating a confidence coefficient indicative of whether the key fob is being carried in a particular clothing item of the user.

The method may further include augmenting key fob height estimates with outputs from an inertial measurement unit (IMU) for detecting driver characteristics that can be used to offset initial vehicle adjustment settings.

Many of the examples illustrated above (paragraphs [0043] - [0057]) describe a key fob for as the portable wireless device. In yet other examples, the portable wireless device may include a personal digital assistant (PDA), cell phone or the like and the systems and methods would include portable wireless device height determinations.

## Claims

1. A system (10) for adjusting vehicle settings based on portable wireless device (PWD) (12) position, the system (10) comprising:
a plurality of nodes (14a, 14b, 14c, 14d), each including one or more antennas configured to receive a PWD signal (56), wherein ranges between each of the plurality of nodes (14a, 14b, 14c, 14d) and the PWD (12) are determined based on the received PWD signals (56); and
a processing system (20) configured to use the ranges determined with respect to each of the plurality of nodes (14a, 14b, 14c, 14d) and calculate a vertical height of the PWD (12), and to determine whether the PWD (12) is being carried within an article of clothing of a driver based on said PWD (12) vertical height, and to make initial vehicle settings for a driver based on PWD (12) vertical height and whether the PWD (12) is likely being carried within an article of clothing of the driver.

2. The system of claim 1, wherein the processing system (20) combines a plurality of time of flight (TOF) measurements or angle-of arrival (AoA) data to construct a map of PWD position.

3. The system of claim 1 or 2, wherein the processing system (20) obtains vertical height samples of the PWD (12) as the PWD (12) traverses across a predetermined perimeter around the vehicle.

4. The system of claim 2, wherein the processing system (20) compares PWD (12) height variations across a predetermined range from the vehicle.

5. The system of claim 1, wherein the processing system (20) determines initial settings based on database values correlating driver waist data or inseam data to PWD height.

6. The system of any preceding claim, wherein the processing system (20) is augmented with outputs from an inertial measurement unit (IMU) (40, 42) on the PWD (12).

7. The system of claim 6, wherein the processor evaluates IMU data and makes changes to vehicle settings based on conditions relating to the article of clothing or driver physical characteristics.

8. The system of claim 7, wherein the processor detects an accessibility condition of the driver based on the IMU data and modifies vehicle settings based on an accessibility-related constraint imposed on the driver.

9. A method of processing signals received from a portable wireless device (PWD) to determine initial vehicle settings, the method comprising:
calculating a PWD position based on signals received at a plurality of nodes on the vehicle (step 102, 104, 106);
determining at least a vertical height dimension of the PWD as the PWD approaches the vehicle (step 108);
assessing whether the PWD is likely being carried within an article of clothing of a driver based on said vertical height dimension determination (step 110); and
generating initial vehicle settings based on a correlation between a vertical height dimension of the PWD and a driver physical characteristic (step 112).

10. The method of claim 9, wherein PWD position is calculated by time of flight (TOF) or angle of arrival (AoA) calculations made between the PWD and the plurality of nodes on the vehicle (step 102).

11. The method of claim 9, wherein a map of vertical height dimension data is generated as the PWD approaches the vehicle.

12. The method of claims 9 or 11, wherein vertical height dimension variation is mapped as the PWD approaches the vehicle.

13. The method of any of claims 9-12, wherein assessing whether the PWD is likely carried within an article of clothing of a driver includes comparing PWD height information to a database of driver characteristics (step 110).

14. The method of claim 13, wherein the article of clothing includes a pair of pants and the database of driver characteristics includes inseam data of a population of drivers.

15. The method of claims 9-14, further including:
augmenting the initial vehicle settings with outputs from an inertial measurement unit (IMU) on the PWD, wherein IMU data is compared with a threshold value, and wherein vehicle settings are altered in response to IMU data being greater than the threshold value.

## Patentansprüche

1. System (10) zum Anpassen von Fahrzeugeinstellungen basierend auf einer Position einer tragbaren drahtlosen Vorrichtung (portable wireless device - PWD) (12), das System (10) umfassend:
eine Vielzahl von Knoten (14a, 14b, 14c, 14d), die jeweils eine oder mehrere Antennen beinhalten, die dazu konfiguriert sind, ein PWD-Signal (56) zu empfangen, wobei Entfernungen zwischen jedem der Vielzahl von Knoten (14a, 14b, 14c, 14d) und der PWD (12) basierend auf den empfangenen PWD-Signalen (56) bestimmt werden; und
ein Verarbeitungssystem (20), das dazu konfiguriert ist, die in Bezug auf jeden der Vielzahl von Knoten (14a, 14b, 14c, 14d) bestimmten Entfernungen zu verwenden und eine vertikale Höhe der PWD (12) zu berechnen und zu bestimmen, ob die PWD (12) in einem Kleidungsstück eines Fahrers getragen wird, basierend auf der vertikalen Höhe der PWD (12), und um anfängliche Fahrzeugeinstellungen für einen Fahrer basierend auf der vertikalen Höhe der PWD (12) und darauf vorzunehmen, ob die PWD (12) wahrscheinlich innerhalb eines Kleidungsstücks des Fahrers getragen wird.

2. System nach Anspruch 1, wobei das Verarbeitungssystem (20) eine Vielzahl von Laufzeit-(time of flight - TOF-)Messungen oder Einfallswinkel-(angle of arrival - AoA-)Daten kombiniert, um eine Karte der PWD-Position zu konstruieren.

3. System nach Anspruch 1 oder 2, wobei das Verarbeitungssystem (20) vertikale Höhenabtastwerte der PWD (12) erhält, während die PWD (12) einen vorbestimmten Umfang um das Fahrzeug herum durchquert.

4. System nach Anspruch 2, wobei das Verarbeitungssystem (20) Höhenschwankungen der PWD (12) über eine vorbestimmte Entfernung von dem Fahrzeug hinweg vergleicht.

5. System nach Anspruch 1, wobei das Verarbeitungssystem (20) Anfangseinstellungen basierend auf Datenbankwerten bestimmt, die Taillendaten oder Innenbeinlängendaten des Fahrers mit der PWD-Höhe korrelieren.

6. System nach einem der vorhergehenden Ansprüche, wobei das Verarbeitungssystem (20) mit Ausgaben von einer Trägheitsmesseinheit (inertial measurement unit - IMU) (40, 42) auf der PWD (12) erweitert wird.

7. System nach Anspruch 6, wobei der Prozessor IMU-Daten auswertet und Änderungen an den Fahrzeugeinstellungen basierend auf Bedingungen vornimmt, die sich auf das Kleidungsstück oder die körperlichen Merkmale des Fahrers beziehen.

8. System nach Anspruch 7, wobei der Prozessor eine Barrierefreiheitsvoraussetzung des Fahrers auf der Grundlage der IMU-Daten erkennt und Fahrzeugeinstellungen basierend auf einer dem Fahrer auferlegten Beschränkung im Zusammenhang mit Barrierefreiheit modifiziert.

9. Verfahren zum Verarbeiten von Signalen, die von einer tragbaren drahtlosen Vorrichtung (PWD) empfangen werden, um anfängliche Fahrzeugeinstellungen zu bestimmen, das Verfahren umfassend:
Berechnen einer PWD-Position basierend auf Signalen, die an einer Vielzahl von Knoten an dem Fahrzeug empfangen werden (Schritt 102, 104, 106);
Bestimmen mindestens einer vertikalen Höhenabmessung der PWD, wenn sich die PWD dem Fahrzeug nähert (Schritt 108);
Bewerten, ob die PWD wahrscheinlich in einem Kleidungsstück eines Fahrers getragen wird, basierend auf der Bestimmung der vertikalen Höhenabmessung (Schritt 110); und
Erzeugen anfänglicher Fahrzeugeinstellungen basierend auf einer Korrelation zwischen einer vertikalen Höhenabmessung der PWD und eines körperlichen Merkmals des Fahrers (Schritt 112).

10. Verfahren nach Anspruch 9, wobei die PWD-Position durch Laufzeit-(TOF-) oder Einfallswinkel-(AoA-)Berechnungen berechnet wird, die zwischen der PWD und der Vielzahl von Knoten an dem Fahrzeug vorgenommen werden (Schritt 102).

11. Verfahren nach Anspruch 9, wobei eine Karte von vertikalen Höhenabmessungsdaten erzeugt wird, wenn sich die PWD dem Fahrzeug nähert.

12. Verfahren nach Anspruch 9 oder 11, wobei die Schwankung der vertikalen Höhenabmessung erfasst wird, wenn sich die PWD dem Fahrzeug nähert.

13. Das Verfahren nach einem der Ansprüche 9-12, wobei das Bewerten, ob die PWD wahrscheinlich in einem Kleidungsstück eines Fahrers getragen wird, Vergleichen von PWD-Höheninformationen mit einer Datenbank von Fahrermerkmalen umfasst (Schritt 110).

14. Verfahren nach Anspruch 13,
wobei das Kleidungsstück eine Hose umfasst und die Datenbank mit Fahrermerkmalen Innenbeinlängendaten einer Grundgesamtheit von Fahrern umfasst.

15. Verfahren nach den Ansprüchen 9-14, ferner umfassend:
Erweitern der anfänglichen Fahrzeugeinstellungen mit Ausgaben von einer Trägheitsmesseinheit (IMU) auf der PWD, wobei IMU-Daten mit einem Schwellenwert verglichen werden und wobei Fahrzeugeinstellungen als Reaktion darauf geändert werden, dass IMU-Daten größer als der Schwellenwert sind.

## Revendications

1. Système (10) de réglage de paramètres de véhicule sur la base de la position d'un dispositif sans fil portable (PWD) (12), le système (10) comprenant :
une pluralité de noeuds (14a, 14b, 14c, 14d), comportant chacun une ou plusieurs antennes conçues pour recevoir un signal PWD (56), dans lequel des plages entre chacun de la pluralité de noeuds (14a, 14b, 14c, 14d) et le PWD (12) sont déterminées sur la base des signaux de PWD reçus (56) ; et
un système de traitement (20) conçu pour utiliser les plages déterminées par rapport à chacun de la pluralité de noeuds (14a, 14b, 14c, 14d) et calculer une hauteur verticale du PWD (12), et pour déterminer si le PWD (12) est transporté à l'intérieur d'un vêtement d'un conducteur sur la base de la hauteur verticale dudit PWD (12), et pour définir des paramètres de véhicule initiaux pour un conducteur sur la base de la hauteur verticale du PWD (12) et si le PWD (12) est susceptible d'être transporté à l'intérieur d'un vêtement du conducteur.

2. Système selon la revendication 1, dans lequel le système de traitement (20) combine une pluralité de mesures de temps de vol (TOF) ou de données d'angle d'arrivée (AoA) pour construire une carte de position de PWD.

3. Système selon la revendication 1 ou 2, dans lequel le système de traitement (20) obtient des échantillons de hauteur verticale du PWD (12) lorsque le PWD (12) traverse un périmètre prédéterminé autour du véhicule.

4. Système selon la revendication 2, dans lequel le système de traitement (20) compare des variations de hauteur du PWD (12) sur toute une plage prédéterminée du véhicule.

5. Système selon la revendication 1, dans lequel le système de traitement (20) détermine des paramètres initiaux sur la base de valeurs de base de données corrélant des données de taille ou des données d'entrejambe de conducteur à une hauteur de PWD.

6. Système selon une quelconque revendication précédente, dans lequel le système de traitement (20) est complété par des sorties d'une unité de mesure inertielle (IMU) (40, 42) sur le PWD (12).

7. Système selon la revendication 6, dans lequel le processeur évalue des données d'IMU et apporte des modifications à des paramètres de véhicule sur la base de conditions relatives au vêtement ou à des caractéristiques physiques de conducteur.

8. Système selon la revendication 7, dans lequel le processeur détecte une condition d'accessibilité du conducteur sur la base des données d'IMU et modifie des paramètres de véhicule sur la base d'une contrainte liée à l'accessibilité imposée au conducteur.

9. Procédé de traitement de signaux reçus depuis un dispositif sans fil portable (PWD) pour déterminer des paramètres de véhicule initiaux, le procédé comprenant :
le calcul d'une position de PWD sur la base de signaux reçus au niveau d'une pluralité de noeuds sur le véhicule (étapes 102, 104, 106) ;
la détermination d'au moins une dimension de hauteur verticale du PWD lorsque le PWD s'approche du véhicule (étape 108) ;
le fait d'évaluer si le PWD est susceptible d'être transporté à l'intérieur d'un vêtement d'un conducteur sur la base de ladite détermination de dimension de hauteur verticale (étape 110) ; et
la génération de paramètres de véhicule initiaux sur la base d'une corrélation entre une dimension de hauteur verticale du PWD et une caractéristique physique de conducteur (étape 112) .

10. Procédé selon la revendication 9, dans lequel une position de PWD est calculée par des calculs de temps de vol (TOF) ou d'angle d'arrivée (AoA) effectués entre le PWD et la pluralité de noeuds sur le véhicule (étape 102).

11. Procédé selon la revendication 9, dans lequel une carte de données de dimension de hauteur verticale est générée lorsque le PWD s'approche du véhicule.

12. Procédé selon les revendications 9 ou 11, dans lequel une variation de dimension de hauteur verticale est cartographiée lorsque le PWD s'approche du véhicule.

13. Procédé selon l'une quelconque des revendications 9 à 12, dans lequel le fait d'évaluer si le PWD est susceptible d'être transporté à l'intérieur d'un vêtement d'un conducteur comporte la comparaison d'informations de hauteur de PWD à une base de données de caractéristiques de conducteur (étape 110).

14. Procédé selon la revendication 13, dans lequel le vêtement comporte un pantalon et la base de données de caractéristiques de conducteur comporte des données d'entrejambe d'une population de conducteurs.

15. Procédé selon les revendications 9 à 14, comportant en outre :
le fait de compléter les paramètres de véhicule initiaux par des sorties d'une unité de mesure inertielle (IMU) sur le PWD, dans lequel des données d'IMU sont comparées à une valeur seuil, et dans lequel des paramètres de véhicule sont modifiés en réponse à des données d'IMU supérieures à la valeur seuil.
